Europäisches Patentamt

European Patent Office

Office européen des brevets

(19)

(11) **EP 0 943 590 A1**

(12) **DEMANDE DE BREVET EUROPEEN**

(43) Date de publication:
22.09.1999 Bulletin 1999/38

(51) Int. Cl.$^6$: **C04B 28/14**, C04B 28/20

(21) Numéro de dépôt: 98870050.6

(22) Date de dépôt: 10.03.1998

(84) Etats contractants désignés:
AT BE CH DE DK ES FI FR GB GR IE IT LI LU MC NL PT SE
Etats d'extension désignés:
AL LT LV MK RO SI

(71) Demandeur: REDCO S.A.
1880 Kapelle-op-den-Bos. (BE)

(72) Inventeurs:
• Anton, Octavian
1020 Bruxelles (BE)

• Jacops, Joris
2812 Mechelen (BE)
• Opsommer, Ann
1800 Vilvoorde (BE)

(74) Mandataire:
Vandeberg, Marie-Paule L.G. et al
Office Kirkpatrick S.A.,
32, Avenue Wolfers
1310 La Hulpe (BE)

(54) **Matériau à base de gypse, procédé de fabrication d'un tel matériau et élément de construction coupe-feu comprenant ce matériau**

(57) L'invention concerne un procédé de fabrication et un matériau comportant une matrice de gypse allégée au moyen d'agrégats poreux de cristaux de silicates de calcium hydratés. Ces agrégats comportent une partie interne dans laquelle les cristaux sont lâchement enchevêtrés et une couche externe plus dense.

Le matériau permet de réaliser des éléments de construction coupe-feu qui combinent une faible densité et une bonne résistance au feu, c'est-à-dire un temps Rf prolongé durant lequel la température de la face de l'élément de construction non-exposée au feu est inférieure à 140°C au-dessus de la température ambiante, mesuré suivant la norme ISO 834.

Fig. 6

EP 0 943 590 A1

## Description

La présente invention concerne un matériau à base de gypse utile pour des applications dans le domaine de la protection contre l'incendie, son procédé de fabrication, et des éléments de construction coupe-feu comprenant ce matériau.

Pour constituer une protection contre l'incendie qui soit efficace et conforme aux exigences réglementaires, un élément de construction coupe-feu doit présenter un comportement au feu satisfaisant tant en matière de réaction au feu du matériau utilisé qu'en matière de capacité coupe-feu. De plus, il ne peut, en cas d'incendie, dégager aucun gaz corrosif ou toxique, ou tout au plus, une quantité inoffensive de ces gaz.

Par réaction au feu d'un matériau, on entend son aptitude à propager ou non l'incendie, qui dépend de son aptitude à transmettre la chaleur, à s'enflammer et à brûler. Le démarrage d'un feu sera d'autant plus difficile que le matériau sera moins combustible et moins inflammable et également peu conducteur de la chaleur.

Par la capacité coupe-feu ou "fire protection" d'un élément de construction, on entend son aptitude à créer une barrière anti-feu. Elle est en général exprimée en terme de résistance au feu (Rf). La résistance au feu d'un élément de construction est mesurée dans des laboratoires spécialisés où il est soumis à un incendie théorique. Les critères auxquels l'élément de construction doit répondre pendant un tel essai sont décrits dans la norme internationale ISO 834, bien connue dans ce domaine de la technique.

Suivant cette norme, un élément de construction, en particulier un élément de séparation aura une bonne capacité coupe-feu si, lorsqu'il est exposé sur une face à un incendie théorique, il présente pendant une période suffisante les propriétés suivantes:

-    stabilité structurelle ("load-bearing capacity")
-    stabilité dimensionnelle et étanchéité aux flammes et à la fumée ("integrity"), et
-    isolation thermique ("insulation").

La durée de résistance au feu (Rf) d'un élément de construction est définie comme étant le temps (exprimé en minutes) pendant lequel il continue à présenter les trois propriétés susmentionnées.

Pour mesurer cette résistance au feu, on enregistre la température moyenne à la face non-exposée d'un élément de construction coupe-feu exposé à un incendie théorique selon les conditions décrites dans la norme ISO 834. Cette température moyenne doit rester le plus longtemps possible sous une limite fixée à 140 °C au-dessus de la température ambiante.

Parmi les matériaux utilisés dans le domaine de la construction, le gypse suscite un intérêt particulier en ce qui concerne sa capacité coupe-feu. Cet intérêt est dû non seulement au fait qu'il est incombustible, mais encore au fait que l'échauffement d'un élément de construction à base de gypse exposé à un incendie est considérablement ralenti grâce à l'effet endothermique marqué qui a lieu lorsque ce matériau est soumis à la chaleur. Quand on chauffe le qypse (ou dihydrate de sulfate de calcium ($CaSO_4.2H_2O$)), il perd d'abord l'eau présente dans ses pores, et se déshydrate progressivement pour se transformer en plâtre (ou hémihydrate de sulfate de calcium ($CaSO_4.\frac{1}{2}H_2O$)) et finalement en anhydrite ($CaSO_4$).

La quantité d'énergie consommée pendant la déshydratation du gypse fait, en principe, d'un produit à base de gypse un excellent moyen de protection contre le feu pour des matériaux sous-jacents.

En pratique, par contre, l'utilisation du gypse comme matière de base pour des éléments de construction coupe-feu présente certains inconvénients.

Ceci est principalement dû au manque de stabilité structurelle du gypse: lors de sa déshydratation, il perd de sa cohésion et des fissures apparaissent. En outre, un tel produit à base de gypse présente sous l'effet de la chaleur un retrait considérable susceptible de créer autour de l'élément de construction des passages par lesquels le feu peut se propager.

Un autre inconvénient non négligeable est la densité élevée d'une matrice de gypse qui se situe en pratique à environ 1350 kg/m$^3$. Parmi les éléments de construction pour lesquels on peut utiliser du gypse, on peut citer par exemple les faux-plafonds, les gaines suspendues, et les parois de séparation non portantes. Pour tous ces éléments, un poids trop important est un inconvénient majeur.

On a essayé depuis longtemps de remédier à ces inconvénients qui ont limité jusqu'à présent l'application étendue du gypse dans le domaine des éléments de construction coupe-feu.

Afin de renforcer les éléments de construction à base de gypse et de limiter leur fissuration à des températures élevées, on ajoute au gypse des charges de renforcement, généralement sous forme de fibres. Ces fibres de renforcement peuvent par exemple être présentes sous forme d'un tissu ou d'un filet noyé dans la matrice de gypse, ou encore sous forme de fibres individuelles dispersées dans cette matrice. Vu leurs propriétés physiques et leur caractère non-inflammable, les fibres de verre sont régulièrement utilisées comme fibres de renforcement pour des éléments de construction coupe-feu à base de gypse.

2

Afin de limiter le retrait à des températures élevées d'un élément de construction à base de gypse, d'autres matières de charge connues telles que l'argile, des cendres volantes, la silice, le talc, le mica et la wollastonite peuvent être dispersées dans la matrice de gypse.

Pour augmenter la stabilité dimensionnelle du gypse en cas d'incendie, il a été proposé dans la demande de brevet européen EP-A-0 258 064 d'ajouter au gypse des composés d'aluminium, ou de silicium tels que le silicate de sodium, le dioxyde de silicium, le gel de silice et l'acide silicique.

Pour remédier au problème de densité élevée du gypse, divers procédés ont été décrits pour la fabrication d'éléments de construction coupe-feu à base de gypse allégé au moyen d'une mousse. EP-A-0 451 503 décrit également un procédé alternatif dans lequel la mousse est, au moins partiellement, remplacée par des particules creuses non-poreuses n'absorbant pas l'eau, telles que des sphéroïdes de verre.

Il est par ailleurs proposé dans EP-A-585 200 de remplacer la mousse au moins partiellement par une matière de charge minérale et poreuse, telle que la perlite expansée ou la vermiculite exfoliée.

Cependant on a constaté que la résistance au feu (Rf) d'un élément coupe-feu allégé à base de gypse est réduite par rapport à celle d'un élément de construction de mêmes dimensions dont la matrice de gypse n'est pas allégée.

Il a déjà été décrit d'alléger une matrice de gypse à l'aide de silicates de calcium hydratés.

Des silicates de calcium hydratés particuliers sont la xonotlite et la tobermorite, qui peuvent être obtenues par la synthèse hydrothermale d'une suspension aqueuse de chaux et de silice, comme décrit dans le brevet US 3,501,324.

La demande FR 2.227.241 décrit un procédé de préparation d'objets moulés en gypse comportant des silicates de calcium cristallins hydratés tels que la xonotlite ou la tobermorite. Aucune structure secondaire de ces cristaux n'est mentionnée dans ce document. La résistance au feu est exprimée, dans ce document, par des caractéristiques physiques du produit (densité, résistance à la flexion, résistance à la compression, retrait linéaire, et fissuration). Ce document décrit uniquement la mesure de critères relatifs à la stabilité dimensionnelle du produit. L'isolation thermique n'y est par contre pas prise en considération.

La demande japonaise n° JP 7-25656 décrit une plaque comprenant une matrice de gypse prise en sandwich entre deux feuilles de papier, cette matrice de gypse étant allégée avec des agglomérats en substance sphériques (structure secondaire) de xonotlite et/ou de tobermorite. Dans ce cas, un problème particulier est d'alléger la matrice de gypse tout en ne perdant pas l'adhérence entre celle-ci et les deux feuilles de papier extérieures.

Bien qu'il soit mentionné dans ce document que les plaques fabriquées suivant ce procédé présentent une bonne "résistance au feu" (sic), seule leur stabilité structurelle et dimensionnelle au feu a en réalité été améliorée. L'isolation thermique n'y est par contre pas prise en compte.

En effet, seules des valeurs de résistance à la flexion, rétrécissement à la chaleur et de fissuration sont données dans ce document. Par contre, l'ensemble des trois critères définissant la capacité coupe-feu, telle que définie dans le cadre du présent texte n'est pas mentionné dans ce document.

Il est connu que les cristaux de xonotlite et/ou de tobermorite peuvent se présenter sous forme d'agglomérats en substance sphériques (ou sphéroïdes) de 10 à 150 microns dans lesquels les cristaux sont lâchement enchevêtrés. De tels agrégats ou particules secondaires sont notamment commercialisés par la firme Promat sous le nom Promaxon®. La préparation de telles particules a également été décrite dans le brevet belge BE 846.252, et dans le brevet US 3,679,446.

On a maintenant trouvé qu'il est possible d'obtenir des éléments de construction allégés à base de gypse sans que cet allégement diminue la résistance au feu, Rf des dits éléments de construction. Il est en effet possible suivant l'invention d'obtenir des éléments de construction à base de gypse et de silicates de calcium hydratés, présentant un temps durant lequel la température à la surface non-exposée reste inférieure à 140°C au dessus de la température ambiante, particulièrement amélioré.

La présente invention a pour objet un matériau à base de gypse utile pour application dans le domaine de la protection contre l'incendie et des procédés de fabrication de ce matériau.

Pour fabriquer suivant l'invention un tel matériau à base de gypse, on prépare une composition à prise hydraulique, contenant du plâtre, de l'eau et des agrégats poreux, sensiblement sphériques, de silicates de calcium hydratés dispersés dans le plâtre.

Dans cette composition, la proportion en poids d'agrégats de silicates de calcium hydratés par rapport au plâtre (R[silicates/plâtre]) est de 1/39 à 1/1, de préférence 1/19 à 3/7, et de manière particulièrement préférée de 1/19 à 1/4.

La quantité totale d'eau dans la composition doit en principe être telle que le rapport en poids eau/solide soit d'au moins égal à 0,5, et de préférence compris entre 0,55 et 2. Cette composition est ensuite laissée faire prise.

Suivant les procédés suivant l'invention, on peut obtenir des agrégats de silicates de calcium hydratés qui comportent une partie interne dans laquelle les cristaux sont très lâchement enchevêtrés et une couche externe où les cristaux sont enchevêtrés de manière plus serrée que dans la partie interne. Les cristaux ont de préférence une forme aciculaire et sont de préférence des cristaux de xonotlite.

Lesdits agrégats de cristaux ont avantageusement un diamètre moyen compris entre 40 et 150 microns, de préférence compris entre 42 et 60 microns et la couche externe a avantageusement une épaisseur comprise entre 4 et 10 microns, de préférence comprise entre 4 et 6 microns.

Suivant un mode de réalisation de l'invention, les agrégats de silicates de calcium hydratés sont susceptibles d'être obtenus par synthèse hydrothermale en milieu agité à partir d'une suspension aqueuse de chaux préalablement traitée par ultrasons, et de silice.

De manière préférée, cette suspension aqueuse de chaux est réalisée en dispersant une source de calcium dans de l'eau dans un rapport en poids eau/matières solides compris entre 8/1 et 30/1, et de manière encore plus préférée dans un rapport compris entre 10/1 et 15/1. Une source de calcium préférée est la chaux vive (Cao), ou éventuellement la chaux hydratée ($Ca(OH)_2$).

Le traitement de la source de chaux comprend avantageusement deux étapes. La fréquence ultrasonique utilisée pour la première étape du traitement peut être comprise entre 19 et 25 kHz, et de préférence entre 19 et 21 kHz. La fréquence ultrasonique utilisée pour la deuxième étape du traitement peut être comprise entre 300 et 600 kHz et de préférence comprise entre 450 et 550 kHz.

Le temps de traitement total est de l'ordre de 30 secondes à 30 minutes.

Suivant un autre mode de réalisation de l'invention, la suspension de chaux est préalablement obtenue par hydratation en présence de 0,2 à 2 % en poids de sulfate par rapport au poids de chaux vive. Ledit sulfate est avantageusement choisi parmi les sulfates de calcium, les sulfates de magnésium et leur mélanges.

Pour la synthèse des silicates de calcium hydratés, une suspension de silice est mélangée à une suspension de chaux obtenue suivant l'un des deux modes de préparation décrits ci-dessus dans un rapport molaire $CaO/SiO_2$ compris avantageusement entre 0,8 et 1,2. Un rapport eau/matières sèches préféré est compris entre 11/1 et 15/1.

La synthèse hydrothermale est conduite sous agitation constante (de l'ordre de 32 tpm à 200 tpm suivant les dimensions du réacteur), à une température de l'ordre de 196°C à 222°C et à une pression ce vapeur d'eau comprise avantageusement entre 15 et 25 bars.

La composition à prise hydraulique peut comporter des fibres de renforcement qui y sont incorporées.

Dans le cadre du présent texte, on désigne par fibres de renforcement de la matière fibreuse apte à renforcer des matériaux ou des éléments de construction à base de gypse et apte à en augmenter la résistance au feu en limitant ou en retardant leur fissuration lors d'une exposition à un incendie. Il peut s'agir de fibres minérales ou organiques, naturelles ou synthétiques.

Suivant un mode de réalisation avantageux, au moins une partie de ces fibres de renforcement sont des fibres de verre.

Les fibres de renforcement peuvent, pour au moins une partie, être présentes sous forme de fibres individuelles dispersées dans la composition à prise hydraulique. De telles fibres individuelles peuvent, par exemple, avoir une longueur moyenne située entre 2 et 20 mm, de préférence entre 4 et 12 mm. Ces fibres individuelles peuvent êtres présentes dans la composition à prise hydraulique en une quantité comprise entre 0,3 et 3,0 % en poids par rapport au plâtre, et de préférence comprise entre 1,0 et 2,5 % en poids par rapport au plâtre.

Les fibres de renforcement peuvent également, pour au moins une partie, être présentes sous forme d'une nappe, d'un filet ou d'un tissu tissé ou non-tissé incorporé dans la composition à prise hydraulique.

Une combinaison de fibres de renforcement individuelles dispersées dans la composition à prise hydraulique et d'une nappe, d'un filet ou d'un tissu de renforcement incorporé dans ladite composition est également possible.

Suivant un autre mode de réalisation avantageux, les fibres de renforcement consistent, au moins pour une partie, en des fibres de cellulose ou en un mélange de fibres de cellulose et de fibres de verre.

Avantageusement, les fibres de cellulose sont prédispersées dans de l'eau avant d'être ajoutées à la composition hydraulique.

Une composition particulièrement avantageuse comporte environ 1% en poids de fibres de cellulose et 2% en poids de fibres de verre par rapport au total de matières solides.

L'ajout de fibres de cellulose a l'avantage d'améliorer les propriétés mécaniques de l'élément de construction sans en détériorer ses propriétés anti-feu. De plus, l'élément de construction ne présente plus de fissurations lorsque des fibres de cellulose y ont été incorporées.

La composition à prise hydraulique peut également comprendre d'autres ingrédients, tels que par exemple des accélérateurs, retardateurs ou des régulateurs de rhéologie, pour autant qu'ils soient compatibles avec les autres ingrédients et avec l'application qu'on donnera au matériau obtenu.

Il est préférable que, lorsque les agrégats de xonotlite sont ajoutés à la composition à prise hydraulique, ils se présentent sous une forme dispersée dans une suspension aqueuse. Ceci leur permet de mieux résister aux forces de cisaillement générées dans le mélangeur, surtout lors de la préparation de la composition. De cette manière les agrégats de xonotlite restent en majorité intacts et confèrent au matériau la microstructure recherchée.

La suspension aqueuse peut comporter une partie ou la totalité de la quantité d'eau nécessaire à la mise en oeuvre.

Selon les conditions de synthèse, les silicates de calcium hydratés peuvent être des cristaux de xonotlite, de tobermorite ou éventuellement d'autres cristaux de silicates de calcium hydratés ou des mélanges de ces cristaux.

Il existe de nombreuses variantes des modes d'exécution du procédé décrit ci-dessus, sans que ces variantes ne sortent du cadre de la présente invention.

La présente invention a également pour objet un matériau comportant une matrice de gypse et des agrégats poreux, sensiblement sphériques, de silicates de calcium hydratés incorporés dans la matrice de gypse, les agrégats de silicates de calcium hydratés étant présents en une proportion en poids par rapport au gypse comprise entre 2 et 84 %, c'est-à-dire que le rapport R[silicates/gypse] est compris entre

$$\frac{1}{39} \ x \ \frac{M_{plâtre}}{M_{gypse}}$$

et

$$\frac{1}{1} \ x \ \frac{M_{plâtre}}{M_{gypse}}$$

$M_{plâtre}$ étant le poids moléculaire du plâtre et $M_{gypse}$ étant le poids moléculaire du gypse. Le rapport R[silicates/gypse] dans le matériau est donc compris entre 1/46 et 1/1,2.

Les dits agrégats comportent une partie interne dans laquelle les cristaux sont très lâchement enchevêtrés et une couche externe où les cristaux sont enchevêtrés de manière plus serrée que dans la partie interne.

La présente invention a également pour objet tout matériau obtenu avec le procédé décrit ci-dessus.

Une matrice de gypse est obtenue par l'hydratation du plâtre. Après hydratation, 100 g de plâtre pur donne en théorie

$$100 \, g \ x \ \frac{M_{gypse}}{M_{plâtre}} = 118,6 \, g$$

de gypse, $M_{gypse}$ (=172) et $M_{plâtre}$ (=145) étant respectivement le poids moléculaire du gypse et celui du plâtre. Selon la nature et la quantité des impuretés dans le plâtre, la masse de gypse obtenue après hydratation peut varier légèrement. Pour autant que les impuretés dans le plâtre soient compatibles avec les autres ingrédients de la composition à prise hydraulique ainsi qu'avec l'application qu'on compte donner au matériau obtenu, des plâtres de diverses origines peuvent être utilisés dans le procédé suivant l'invention.

Dans la description du procédé suivant l'invention, les quantités d'agrégats de silicates de calcium hydratés dans la composition à prise hydraulique sont, dans le cadre du présent texte, exprimée en proportions en poids par rapport au plâtre (R[silicates/plâtre]). En ce qui concerne le matériau et les éléments de construction suivant l'invention, les quantités d'agrégats de silicates de calcium hydratés sont, par analogie, exprimées en proportions en poids par rapport au gypse (R[silicates/gypse]). Vu la différence en poids moléculaire entre le plâtre et le gypse, il y a lieu d'adapter les valeurs de R[silicates/plâtre] mentionnées ci-dessus par rapport au procédé suivant l'invention pour en faire des valeurs de R[silicates/gypse].

Comme expliqué ci-dessus des fibres de renforcement peuvent être présentes dans la composition à prise hydraulique. Si, de manière préférée, la quantité de fibres présentes dans la composition hydraulique de départ est comprise entre 0,3 et 3,0 % en poids par rapport au plâtre, la quantité de fibres dans le matériau fini en gypse sera située entre 0,25 et 2,53% de fibres par rapport au gypse, c'est-à-dire entre

$$0,3 \ x \ \frac{M_{plâtre}}{M_{gypse}}$$

et

$$3,0 \ x \ \frac{M_{pâltre}}{M_{gypse}}$$

% en poids par rapport au gypse, et de manière encore plus avantageuse entre 0,84 et 2,11 % c'est-à-dire entre

$$1,0 \; x \; \frac{M_{plâtre}}{M_{gypse}}$$

et

$$2,5 \; x \; \frac{M_{plâtre}}{M_{gypse}}$$

% en poids par rapport au gypse.

Le matériau suivant l'invention peut aussi comporter d'autres ingrédients, tels que par exemple des colorants ou des agents hydrofuges, pour autant qu'ils soient compatibles avec les autres ingrédients et avec l'application du dit matériau.

Le matériau suivant l'invention trouve plusieurs applications dans le domaine de la protection contre l'incendie.

Le matériau suivant l'invention convient pour remplir des cavités dans des structures dont on cherche à augmenter la résistance au feu. Le matériau suivant l'invention est ainsi utile comme matériau de remplissage d'une porte coupe-feu.

Le matériau suivant l'invention trouve une application importante comme matériau de base pour des éléments de construction et plus particulièrement pour des éléments de construction coupe-feu.

La présente invention a encore pour objet un élément de construction coupe-feu comportant un matériau tel que décrit ci-dessus. De tels éléments de construction sont par exemple des revêtements, cloisons, écrans, gaines de colonnes, gaines de poutres, carreaux de plafond, regards, gaines techniques, conduits de ventilation et de désenfumage, caissons pour câbles électriques, etc. D'autres applications coupe-feu sont également possible.

Le procédé suivant l'invention permet de fabriquer un matériau ainsi que des éléments de construction à base de gypse qui combinent plusieurs propriétés recherchées dans le domaine de la protection contre l'incendie. En particulier, le procédé suivant l'invention permet de fabriquer des éléments de construction coupe-feu ayant simultanément une résistance au feu élevée et une densité réduite.

La présence des particules secondaires de silicates de calcium hydratés de structure particulière, selon l'invention, exerce en premier lieu un effet allégeant sur la matrice de gypse. A densité égale, ces particules confèrent en effet aux éléments de construction suivant l'invention une résistance au feu supérieure par rapport à celle que confèrent d'autres matières de charge allégeantes suivant l'état de la technique y compris par rapport à l'utilisation de particule sphériques de xonotlite décrite dans le document JP 7-25656.

Un autre avantage du procédé suivant l'invention est qu'il peut être exécuté avec des installations connues.

Un exemple pratique du procédé suivant l'invention est illustré plus en détail ci-dessous en comparaison avec l'état de la technique.

La fig. 1 est une photo prise au microscope électronique de particules de xonotlite suivant l'état de la technique.

La fig. 2 est une photo prise au microscope électronique de particules de xonotlite suivant l'invention.

La fig. 3 est un graphique illustrant la répartition de la taille des particules de chaux hydratée produites suivant l'état de la technique.

La fig. 4 est un graphique illustrant la répartition de la taille des particules de chaux hydratée produites suivant l'invention.

La fig. 5 est un diagramme de diffraction X d'une xonotlite suivant l'état de la technique et suivant l'invention.

La fig. 6 est un graphique illustrant l'évolution de la température moyenne mesurée suivant la norme ISO 834 de la face non exposée d'éléments coupe-feu suivant l'invention et suivant l'état de la technique.

I. Production de silicates de calcium hydratés I.A. Suivant l'état de la technique

Des procédés de production de particules de silicates de calcium hydratés sont bien connus de l'état de la technique, par exemple de BE-A-846.252. Suivant ce document on mélange une source de calcium, telle que de la chaux, avec une source de silice et de l'eau. On fait réagir les composants dans un réacteur avec agitation et apport de chaleur, et sous une pression de vapeur saturée d'eau.

La proportion de chaux et de silice est ajustée de manière à obtenir soit des cristaux de xonotlite, soit des cristaux de tobermorite, soit un mélange des deux.

Le produit de réaction hydrothermale est une suspension de cristaux de xonotlite et/ou de tobermorite, ces cristaux (structure primaire) étant agglomérés en particules secondaires en substance sphériques.

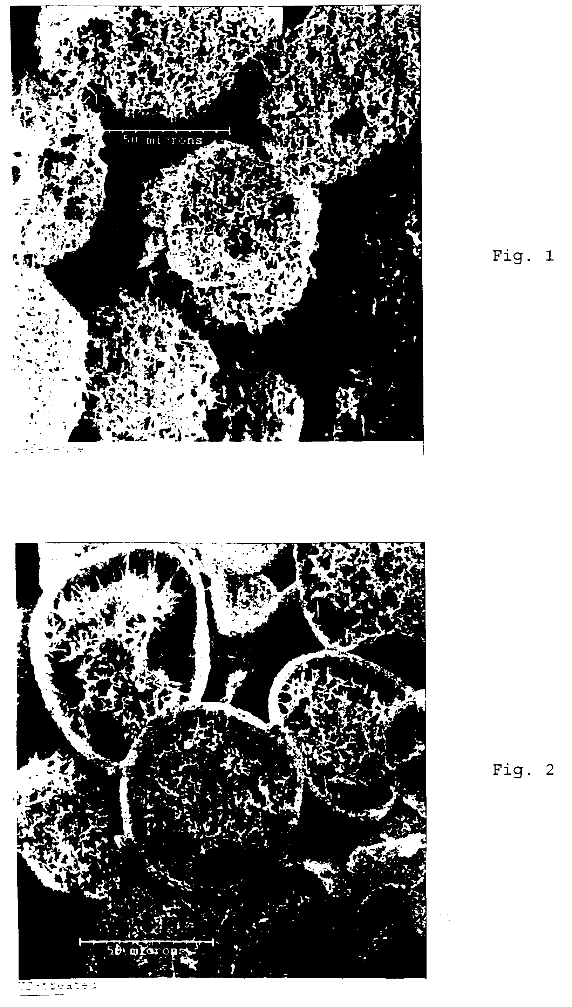

La figure 1 est une photo en microscopie électronique sur une section transversale coupant des particules secondaire de xonotlite. Une telle photo est obtenue par cryo-fracture d'un échantillon de particules c'est-à-dire qu'une partie de la suspension de silicates de calcium obtenue ci-dessus est égouttée puis congelée. L'échantillon congelé est alors coupé à l'aide d'un objet coupant et observé au microscope électronique.

La figure 1 montre des agglomérats en coupe dans lesquels des cristaux de xonotlite sont orientés en trois dimensions et entremêlés lâchement. Ces agglomérats forment ainsi des particules poreuses contenant de nombreuses microcavités.

Le diamètre et la densité apparente des particules secondaires peuvent être contrôlés notamment en ajustant le rapport eau/matière solide dans la composition de départ.

I.B. Production de silicates de calcium hydratés suivant l'invention

I.B.1. Par sonochimie

I.B.1.a Préparation des matières premières

Dans un Sonoréacteur®, tel que ceux vendus par la société UNDATIM Ultrasonics S.A., de la chaux vive est dispersée dans de l'eau à 60°C dans un rapport en poids eau/matières solides de 12/1.

Le traitement de la source de chaux comprend deux étapes, la première a un effet sur la dispersion des particules et la seconde sur l'agglomération des particules.

La fréquence ultrasonique utilisée pour la première étape du traitement est de 20.5 kHz.

La fréquence ultrasonique utilisée pour la deuxième étape du traitement est de l'ordre de 500 kHz.

Le temps de traitement est de 10 minutes pour la première étape et de 5 minutes pour la deuxième étape.

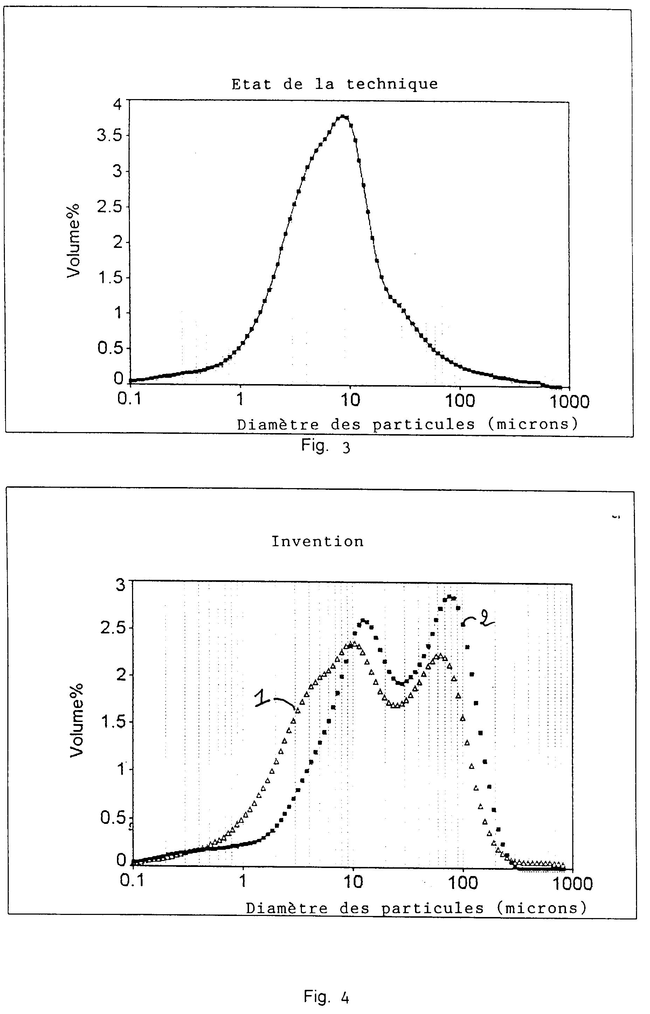

On obtient après ce traitement aux ultrasons une suspension aqueuse de chaux éteinte comprenant des particules d'hydrate de calcium. La distribution bimodale de la taille de ces particules est telle que montrée à la figure 4, courbe 1.

Pour comparaison, une suspension aqueuse de chaux éteinte, non traitée aux ultrasons, présente une distribution de la taille des particules telle que représentée à la figure 3. On peut voir sur cette figure que la distribution est monomodale, et que la majorité des particules ont des dimensions comprises entre 2 et 20 microns.

Sur la figure 4, courbe 1, on peut voir que la suspension de chaux traitée aux ultrasons de la manière décrite ci-dessus, présente une distribution bimodale de la taille des particules. Ceci signifie que les cristaux de $Ca(OH)_2$ sont groupés en deux populations de particules dont la distribution de la taille est centrée respectivement autour de 10 et 60 microns. Ces particules sont des agglomérats de cristaux.

Une source de silice, telle que du quartz broyé est dispersée dans de l'eau. Celle-ci peut également être traitée aux ultrasons à une fréquence de l'ordre de 20 kHz, de préférence.

I.B.1.b Synthèse des silicates de calcium

La suspension de silice est mélangée à la suspension de chaux décrite ci-dessus et introduite dans un réacteur pour réalisation de la synthèse hydrothermale dans un rapport molaire $CaO/SiO_2$ de 0,96. Le rapport eau/solide dans le réacteur est de 13,8.

La synthèse hydrothermale est conduite sous agitation constante (de l'ordre de 32 tpm à 200 tpm suivant les dimensions du réacteur).

Dès la fermeture du réacteur, la température est amenée progressivement à 210°C en 2 heures. Elle est maintenue à ce niveau pendant 3 heures, puis le réacteur est refroidi progressivement en 4 heures jusqu'à environ 50°C.

A la fin de la réaction, on obtient alors une suspension aqueuse de xonotlite comportant des agrégats secondaires en substance sphériques tels que représentés sur la figure 2. La figure 2 est une photo prise de la même manière que la figure 1, c'est-à-dire sur un échantillon obtenu par cryo-fracture. La figure 2, comme la figure 1, montre donc des particules secondaires en coupe.

Ces agrégats ont un diamètre moyen d'environ 50 microns. Ils comportent une partie interne constituée de cristaux de xonotlite orientés en trois dimensions et lâchement enchevêtrés, des cavités étant ménagées entre les cristaux.

A la périphérie de ces agrégats, on observe une couche de 4 à 6 microns d'épaisseur où les cristaux sont plus fins et sont enchevêtrés de manière beaucoup plus serrée que dans la partie centrale. Cette couche forme une paroi microporeuse qui entoure la partie interne des agrégats.

Pour comparaison, la figure 1 représente des agrégats de xonotlite obtenus de manière standard telle que décrite ci-dessus, c'est-à-dire sans traitement préalable de la chaux et éventuellement de la silice aux ultrasons.

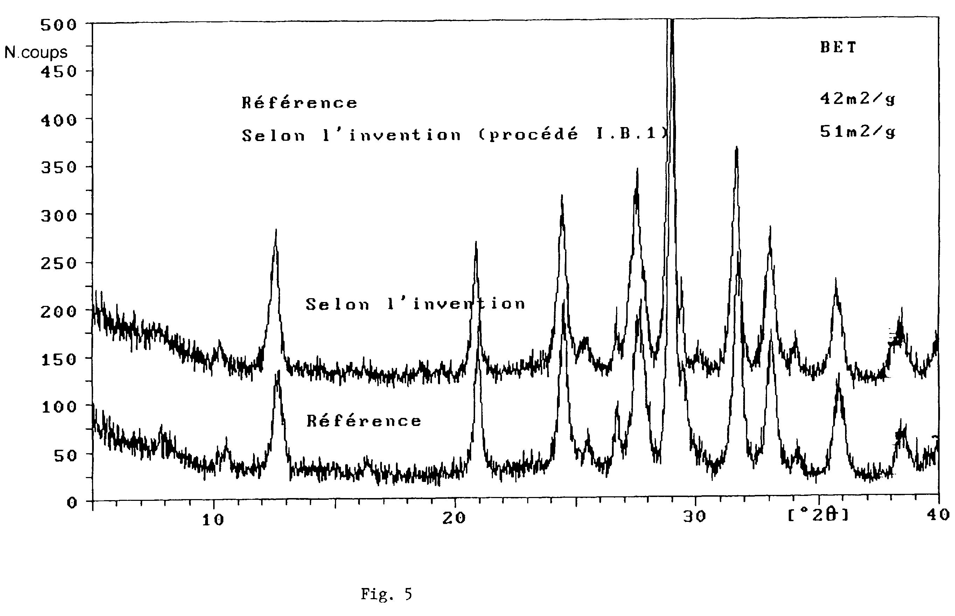

La figure 5 montre que pour une composition minérale identique, les particules de xonotlite suivant l'invention (Fig. 2) ont une surface spécifique (BET) plus élevée que celle des particules secondaires obtenues suivant l'état de la technique (Fig. 1). La surface spécifique des particules suivant l'invention est de 51 m$^2$/g, alors que la surface spécifique des particules suivant l'état de la technique n'est que de 42 m$^2$/g. Cette augmentation de la surface spécifique est attribuée à l'effet de la paroi microporeuse.

I.B.2. Par réaction chimique

I.B.2.a. Préparation des matières premières

0,7 % en poids de gypse par rapport au poids de chaux vive sont introduits dans de l'eau à 60°C. La chaux vive est ensuite ajoutée. La figure 4, courbe 2, montre la distribution de la taille des particules de chaux hydratée. On peut observer que cette distribution est également bimodale et comporte deux pics centrés respectivement sur des tailles de particules de 12 et 80 microns.

Du quartz est ensuite ajoutée à la suspension de chaux hydratée. De l'eau peut encore être ajoutée pour corriger le rapport eau/matières solides.

I.B.2.b. Synthèse des silicates de calcium

Cette suspension est soumise à la même réaction hydrothermale que celle décrite ci-dessus au point I.B.1.b. On obtient alors une suspension aqueuse de xonotlite suivant l'invention comportant des agrégats de même type que ceux décrits ci-dessus et illustré à la figure 2.

II. Fabrication d'un élément de construction

A la suspension aqueuse de xonotlite décrite ci-dessus, telle qu'elle sort du réacteur, est ajouté une suspension de silice amorphe et des fibres de cellulose dispersée dans de l'eau. Le tout est introduit dans un malaxeur rotatif avec d'autres additifs éventuels. Le plâtre et des fibres de verre sont alors ajoutés.

Après que les ingrédients ont été dispersés dans le malaxeur, la composition à prise hydraulique est versée sur une bande transporteuse continue où elle s'étend. La composition est ensuite mise en forme entre ladite bande transporteuse et une bande supérieure, substantiellement parallèle avec la bande transporteuse, évoluant dans le même sens et avec substantiellement la même vitesse que la bande transporteuse. Avant cette mise en forme de la composition à prise hydraulique, la bande transporteuse peut être soumise à une vibration mécanique.

Cette mise en forme peut être réalisée par une méthode connue par exemple de EP-A-0 451 503.

Alternativement, la composition peut être versée dans des moules statiques suivant une technique bien connue dans la technologie du plâtre. La bande transporteuse ou le moule statique peuvent être soumis à une vibration mécanique permettant à la composition à prise hydraulique de s'étendre de manière homogène pour arriver à la forme souhaitée.

Après durcissement de la composition, le matériau ou le produit ainsi obtenu est séché, découpé et éventuellement usiné dans sa forme finale.

Il est connu de l'état de la technique plusieurs procédés continus et discontinus pour incorporer une nappe de fibres de renforcement dans un mélange à prise hydraulique pendant que ou après que ledit mélange est versé dans un moule. De tels procédés peuvent facilement être intégrés dans le procédé suivant l'invention.

Il s'avère souvent utile de calandrer la composition à prise hydraulique avant qu'elle fasse prise. On connaît dans l'état de la technique plusieurs procédés continus et discontinus de calandrage qui peuvent être incorporés sans plus dans le procédé suivant l'invention.

II.1. Exemple 1 suivant l'invention

100 parties en poids d'une suspension aqueuse contenant 10 parties en poids de sphéroïdes de xonotlite obtenus suivant le premier procédé décrit ci-dessus (sous I.B.1.) sont mélangées avec 2 parties en poids de silice amorphe de type Elkem® et avec 0,86 partie de fibres de cellulose préalablement dispersées dans 24,6 parties d'eau.

2 parties en poids de fibres de verre coupées sont ajoutées au mélange ainsi que 1,4 partie en poids d'eau.

Par la suite, 85,14 parties en poids de plâtre sont ajoutées en mélangeant la composition pendant 1 minute. La suspension aqueuse de xonotlite a une température de 35 à 40°C lorsqu'elle est mise en contact avec le plâtre.

Au total la composition contient 116 parties en poids d'eau pour 100 parties en poids de matières sèches totales.

La composition à prise hydraulique ainsi obtenue est immédiatement versée dans un moule afin de réaliser une plaque d'une épaisseur de 20 mm. Après hydratation totale du plâtre, la plaque est démoulée et séchée dans un four ventilé à 40°C jusqu'à stabilisation du poids.

### II.2. Exemple 2 suivant l'invention

Une plaque est réalisée en suivant le procédé décrit à l'exemple 1, avec les mêmes ingrédients, dans les mêmes proportions mis à part le fait que la suspension aqueuse de xonotlite est obtenue par le procédé chimique décrit sous I.B.2.

### II.3. Exemple 3 suivant l'invention

Une plaque est réalisée avec les ingrédients suivants :

- 200 parties en poids d'une suspension aqueuse contenant 20 parties en poids de sphéroïdes de xonotlite obtenue avec le procédé sonochimique décrit ci-dessus sous I.B.1.,
- 2 parties en poids de silice amorphe,
- 2 parties en poids de fibres de verres coupées,
- 0,86 partie en poids de fibres de cellulose préalablement dispersés dans 24,6 parties d'eau et essorées à 4,8 parties d'eau avant d'être ajoutées au mélange,
- 3,2 parties en poids d'eau, puis
- 75,14 parties en poids de plâtre.

Au total, la composition contient 188 parties en poids d'eau pour 100 parties en poids de matières sèches totales.

Les plaques sont formées de la manière décrite ci-dessus dans l'exemple 1.

### II.4. Exemple comparatif 4

Une plaque est réalisée avec les ingrédients suivants :

- 100 parties en poids d'une suspension aqueuse contenant 10 parties en poids de sphéroïdes de xonotlite obtenue suivant l'état de la technique,
- 2 parties en poids de silice amorphe,
- 2 parties en poids de fibres de verres coupées,
- 0,86 partie en poids de fibres de cellulose préalablement dispersés dans 24,6 parties d'eau,
- 1,4 partie en poids d'eau, puis
- 85,14 parties en poids de plâtre.

Au total la composition contient 116 parties en poids d'eau pour 100 parties en poids de matières sèches totale.

Les plaques sont formées de la manière décrite ci-dessus dans l'exemple 1.

### II.5. Exemple comparatif 5

Une plaque est réalisée avec les ingrédients suivants :

- 0,08 partie en poids de Perlankrol® (agent moussant connu de l'état de la technique),
- 2 parties en poids de silice amorphe,
- 2 parties en poids de fibres de verres coupées,
- 0,86 partie en poids de fibres de cellulose préalablement dispersés dans 24,6 parties d'eau,
- 27,3 parties en poids d'eau, puis
- 95,14 parties en poids de plâtre.

Au total la composition contient 51,9 parties en poids d'eau pour 100 parties en poids de matières sèches totale.

Les plaques sont formées de la manière décrite ci-dessus dans l'exemple 1.

Les ingrédients des différentes compositions à prise hydraulique et les quantités utilisées sont récapitulés dans le tableau 1.

TABLEAU 1

| | Exemples suivant l'invention | | | Exemples comparatifs | |
|---|---|---|---|---|---|
| | 1 | 2 | 3 | 4 | 5 |
| | Nombre de parties en poids | | | | |
| Sphéroïdes de xonotlite | | | | | |
| particules obtenues par sonochimie | 10 | -- | 20 | -- | -- |
| particules obtenues par voie chimique | -- | 10 | -- | -- | -- |
| standard | -- | -- | -- | 10 | -- |
| Plâtre | 85,14 | 85,14 | 75,14 | 85,14 | 95,14 |
| Silice amorphe (Elkem®) | 2,0 | 2,0 | 2,0 | 2,0 | 2,0 |
| Fibres de verre | 2,0 | 2,0 | 2,0 | 2,0 | 2,0 |
| Cellulose | 0,86 | 0,86 | 0,86 | 0,86 | 0,86 |
| Perlankrol® | -- | -- | -- | -- | 0,08 |
| eau | 116 | 116 | 188 | 116 | 51,9 |
| Rapport [Eau/m.s.] | 1,16 | 1,16 | 1,88 | 1,16 | 0,52 |
| Rapport [Xonolite/plâtre] | 1/8,5 | 1/8,5 | 1/3,8 | 1/8,5 | 0 |
| Total | 216 | 216 | 288 | 216 | 152 |

Afin d'évaluer les propriétés coupe-feu qu'aurait un élément de construction correspondant, chaque plaque est soumise à un essai coupe-feu suivant la norme ISO 834. La valeur Rf est le temps (exprimé en minutes) écoulé avant que la température moyenne de la face non-exposée atteigne 140 °C au-dessus de la température ambiante.

Le retrait thermique est mesuré après une exposition des plaques de 3 heures à 950°C.

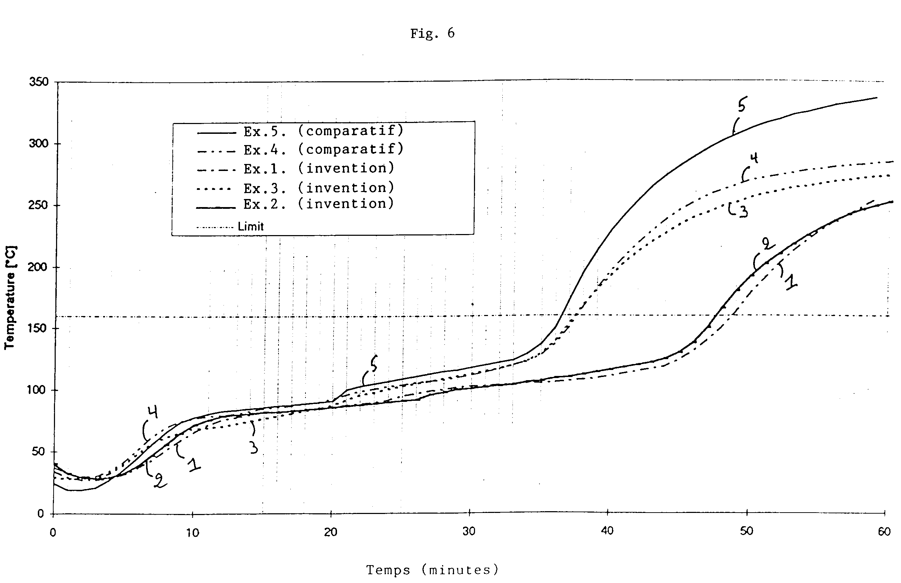

Les résultats sont présentés à la figure 6 et dans le tableau 2 ci-dessous.

TABLEAU 2

| | Exemples suivant l'invention | | | Exemples comparatifs | |
|---|---|---|---|---|---|
| | 1 | 2 | 3 | 4 | 5 |
| Densité [kg/m$^3$] | 850 | 850 | 560 | 850 | 850 |
| Résistance à la flexion [MPa] | 3,4 | 3,4 | 1,5 | 3,0 | 3,1 |
| Retrait thermique [%] | 4,5 | 4,4 | 3,0 | 5,6 | 10,0 |
| $R_f$ [min.] | 48,8 | 47,5 | 37,6 | 37,5 | 36,5 |

La figure 6 représente l'évolution de la température au cours du temps des plaques soumises à l'essai coupe-feu suivant la norme ISO 834.

Il ressort de cette figure que la température moyenne de la face non-exposée des plaques suivant les exemples de réalisation 1 et 2 reste plus longtemps en-dessous de la limite ($T_{lim}$) de 140 °C au-dessus de la température ambiante ($T_0$) imposée par la norme ISO 834, ceci à densité égale par rapport aux plaques selon l'état de la technique (exemples 4 et 5). Le gain de temps est de plus de 10 minutes (soit un gain de 30 %).

Il ressort encore de la comparaison des courbes des exemples 3 et 4, que pour une résistance au feu approximativement identique (Rf = 37,6), l'invention permet de réaliser des plaques de densité moindre : 560 kg/m$^3$ pour la plaque selon l'invention (exemple 3), au lieu de 850 kg/m$^3$ pour une plaque utilisant du xonotlite selon l'état de la technique (exemple 4). Ce gain de densité constitue également un avantage important.

Il est également à noter que, même lorsque la température moyenne (Rf) des plaques suivant l'invention dépasse la limite de 140 °C au-dessus de la température ambiante, cette température reste néanmoins considérablement en-dessous de la température des plaques de l'état de la technique. Cette propriété des plaques suivant l'invention peut jouer un rôle important dans certaines applications coupe-feu, plus particulièrement pour la protection contre l'incendie de structures métalliques, telles que les colonnes et poutres en acier.

Le retrait thermique des trois plaques réalisées suivant l'invention est amélioré. L'amélioration est particulièrement conséquente par rapport à la plaque de l'exemple 5, réalisée avec un agent moussant suivant l'état de la technique mais est également marquée par rapport à la plaque réalisée avec les particules de xonotlite standards (exemple 4).

A densité égale, l'invention a également amélioré la résistance à la flexion des plaques. La plus faible résistance à la flexion de la plaque suivant l'exemple 3 est évidemment due à sa plus faible densité.

En conclusion, tout en ayant une densité réduite par rapport aux éléments de construction coupe-feu traditionnels en gypse, l'invention permet de réaliser des éléments de construction à base de gypse qui présentent une résistance au feu qui convient pour des applications comme éléments de construction coupe-feu.

Par résistance au feu, on entend la durée pendant laquelle les plaques présentent, à la fois, une bonne stabilité structurelle, une bonne stabilité dimensionnelle et une bonne isolation thermique.

## Revendications

1. Matériau comportant une matrice de gypse et des agrégats poreux, sensiblement sphériques, de cristaux de silicate de calcium hydratés incorporés dans la matrice de gypse, les agrégats de silicates de calcium hydratés étant présents en une proportion en poids par rapport au gypse de 2 à 84 %,

   le matériau étant caractérisé en ce que les dits agrégats de silicates comportent une partie interne dans laquelle les cristaux sont lâchement enchevêtrés et une couche externe où les cristaux sont enchevêtrés de manière plus serrée que dans la partie interne.

2. Matériau suivant la revendication précédente, caractérisé en ce que lesdits agrégats ont un diamètre moyen compris entre 40 et 150 microns.

3. Matériau suivant l'une quelconque des revendications précédentes, caractérisé en ce que les cristaux de silicate de calcium hydratés sont des cristaux de xonotlite.

4. Matériau suivant l'une quelconque des revendications précédentes, caractérisé en ce qu'il comporte des fibres de renforcement incorporées dans la matrice de gypse.

5. Matériau suivant la revendication 4, caractérisé en ce qu'au moins une partie de ces fibres de renforcement sont choisies parmi les fibres de verre, les fibres de cellulose ou les mélanges de ces fibres.

6. Procédé de fabrication d'un matériau à base de gypse suivant l'une quelconque des revendications précédentes, comportant la préparation et la prise d'une composition à prise hydraulique contenant du plâtre, de l'eau, et des agrégats poreux, sensiblement sphériques, de silicates de calcium hydratés, ces agrégats étant dispersés dans le plâtre en une proportion en poids par rapport au plâtre de 1/39 à 1/1,

   le procédé étant caractérisé en ce que les agrégats de silicates de calcium hydratés sont susceptibles d'être obtenus par synthèse hydrothermale en milieu agité à partir d'une suspension aqueuse de chaux préalablement traitée aux ultrasons et de silice.

7. Procédé suivant la revendication 6, caractérisé en ce que le traitement de la suspension de chaux comporte une étape de dispersion suivie d'une étape d'agglomération.

8. Procédé suivant la revendication 7, caractérisé en ce que le traitement de la suspension de chaux est réalisé avec des ultrasons dont la fréquence est comprise entre 19 et 21 kHz pour la première étape et comprise entre 300 et 600 kHz pour la seconde étape.

9. Procédé de fabrication d'un matériau à base de gypse suivant l'une quelconque des revendications 1 à 5, comportant la préparation et la prise d'une composition à prise hydraulique contenant du plâtre, de l'eau, et des agrégats poreux, sensiblement sphériques, de silicates de calcium hydratés, ces agrégats étant dispersés dans le plâtre en une proportion en poids par rapport au plâtre de 1/39 à 1/1,

le procédé étant caractérisé en ce que les agrégats de silicates de calcium hydratés sont susceptibles d'être obtenus par synthèse hydrothermale en milieu agité, à partir d'une suspension aqueuse de chaux et de silice, la suspension de chaux étant préalablement obtenue par hydratation en présence de 0,2 à 2 % en poids de sulfate par rapport au poids de chaux vive.

10. Procédé suivant la revendication 9, caractérisé en ce que ledit sulfate est choisi parmi le sulfate de calcium, le sulfate de magnésium ou leur mélange.

11. Procédé suivant l'une quelconque des revendications 6 à 10, caractérisé en ce que la composition à prise hydraulique comporte des fibres de renforcement incorporées dans la composition.

12. Procédé suivant la revendication 11, caractérisé en ce qu'au moins une partie de ces fibres de renforcement est choisie parmi les fibres de verre, les fibres de cellulose ou leur mélange.

13. Elément de construction coupe-feu, caractérisé en ce qu'il comporte le matériau obtenu par le procédé suivant l'une quelconque des revendications 6 à 12.

14. Elément de construction coupe-feu, caractérisé en ce qu'il comporte le matériau suivant l'une quelconque des revendications 1 à 5.

15. Elément de construction coupe-feu suivant l'une quelconque des revendications 13 et 14, caractérisé en ce qu'il est choisi parmi le groupe comprenant: revêtements, cloisons, écrans, gaines de colonnes, gaines de poutres, carreaux et éléments de plafond, regards, gaines techniques, conduits et clapets de ventilation et de désenfumage, caissons pour câbles électriques, éléments d'isolation de sol.

Fig. 1

Fig. 2

Etat de la technique

Fig. 3

Invention

Fig. 4

14

Fig. 5

Fig. 6

EP 0 943 590 A1

16

Temperature [°C]

Temps (minutes)

Ex.5. (comparatif)
Ex.4. (comparatif)
Ex.1. (invention)
Ex.3. (invention)
Ex.2. (invention)
Limit

Office européen
des brevets

**RAPPORT DE RECHERCHE EUROPEENNE**

Numéro de la demande

EP 98 87 0050

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | FR 2 227 241 A (NIPPON SYNTHETIC CHEM IND) 22 novembre 1974<br>* page 1, ligne 1 - ligne 4 *<br>* page 2, ligne 5 - ligne 32 *<br>* revendications 1,2 * | 1-15 | C04B28/14<br>C04B28/20 |
| A | EP 0 539 712 A (METALLTUEREN WERKE DMW SCHWARZ) 5 mai 1993<br>* revendications 1-5 * | 1-5, 13-15 | |
| A | DATABASE WPI<br>Section Ch, Week 8240<br>Derwent Publications Ltd., London, GB;<br>Class C04, AN 82-84839E<br>XP002072304<br>& JP 57 140 351 A (NIPPON SYNTHETIC CHEM IND CO)<br>* abrégé * | 1-12 | |
| A | DATABASE WPI<br>Section Ch, Week 8212<br>Derwent Publications Ltd., London, GB;<br>Class L02, AN 82-23102E<br>XP002072305<br>& JP 57 027 958 A (ASAHI GLASS CO LTD)<br>* abrégé * | 1-12 | DOMAINES TECHNIQUES RECHERCHES (Int.Cl.6)<br><br>C04B |
| A | GB 2 106 087 A (AGENCY IND SCIENCE TECHN) 7 avril 1983<br>* exemple 1 * | 6,9 | |
| A | US 4 298 386 A (KUBO KAZUHIKO ET AL) 3 novembre 1981<br>* revendications 1,16 * | 6,9 | |

Le présent rapport a été établi pour toutes les revendications

| Lieu de la recherche | Date d'achèvement de la recherche | Examinateur |
|---|---|---|
| MUNICH | 22 juillet 1998 | Mini, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

—————————————————————
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 98 87 0050

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-07-1998

| Document brevet cité au rapport de recherche | | Date de publication | Membre(s) de la famille de brevet(s) | | Date de publication |
|---|---|---|---|---|---|
| FR 2227241 | A | 22-11-1974 | JP | 49133414 A | 21-12-1974 |
| | | | JP | 1149449 C | 14-06-1983 |
| | | | JP | 50085626 A | 10-07-1975 |
| | | | JP | 56044028 B | 16-10-1981 |
| | | | DE | 2419562 A | 21-11-1974 |
| | | | GB | 1442484 A | 14-07-1976 |
| | | | US | 3957522 A | 18-05-1976 |
| EP 0539712 | A | 05-05-1993 | DE | 4135416 C | 15-04-1993 |
| GB 2106087 | A | 07-04-1983 | JP | 1226785 C | 31-08-1984 |
| | | | JP | 58041752 A | 11-03-1983 |
| | | | JP | 58044627 B | 04-10-1983 |
| | | | HK | 29687 A | 24-04-1987 |
| US 4298386 | A | 03-11-1981 | JP | 1695821 C | 28-09-1992 |
| | | | JP | 2014285 B | 06-04-1990 |
| | | | JP | 55109217 A | 22-08-1980 |
| | | | CA | 1134120 A | 26-10-1982 |
| | | | DE | 2936169 A | 14-08-1980 |
| | | | DE | 2953525 C | 10-01-1985 |
| | | | DE | 2953526 C | 12-04-1984 |

EPO FORM P0460

Pour tout renseignement concernant cette annexe : voir Journal Officiel de l'Office européen des brevets, No.12/82